# FASCICULE DE BREVET EUROPEEN

(11) **EP 3 015 647 B1**
(45) Date de publication et mention de la délivrance du brevet: **24.02.2021**
(21) Numéro de dépôt: 15190510.6
(22) Date de dépôt: 20.10.2015
(51) Int. Cl.: F01D 5/14, B22F 5/04

(54) **AUBE DE TURBOMACHINE AXIALE, PROCÉDÉ DE FABRICATION ET TURBOMACHINE ASSOCIÉS**
LAUFSCHAUFEL EINER AXIALEN STRÖMUNGSMASCHINE, ZUGEHÖRIGES HERSTELLUNGSVERFAHREN UND STRÖMUNGSMASCHINE
BLADE OF AN AXIAL TURBOMACHINE, CORRESPONDING MANUFACTURING METHOD AND TURBOMACHINE

(30) Priorité: 28.10.2014 BE 201400797
(43) Date de publication de la demande: 04.05.2016
(73) Titulaire: Safran Aero Boosters SA, 4041 Herstal (BE)
(72) Inventeur: CORTEQUISSE, M. Jean-François, 3870 Heers (BE)
(74) Mandataire: Lecomte & Partners

(56) Documents cités:
- EP-A1- 0 764 764
- EP-A1- 1 669 144
- EP-A2- 1 447 208
- EP-A2- 1 980 714
- US-A- 5 490 764
- "ROHACELL WF Polymethacrylimide Foam (Product Information)", , 1 janvier 2011 (2011-01-01), XP055194852, Darmstadt, Germany Extrait de l'Internet: URL:http://www.rohacell.com/sites/dc/Downl oadcenter/Evonik/Product/ROHACELL/product- information/ROHACELL%20WF%20Product%20Info rmation.pdf [extrait le 2015-06-10]
- "ROHACELL A Polymethacrylimide Foam, Aircraft Grade (Product Information)", , 1 janvier 2011 (2011-01-01), XP055194858, Darmstadt, Germany Extrait de l'Internet: URL:http://www.rohacell.com/sites/dc/Downl oadcenter/Evonik/Product/ROHACELL/product- information/ROHACELL%20A%20Product%20Infor mation.pdf [extrait le 2015-06-10]
- "ROHACELL XT Polymethacrylimide Foam (Product Information)", , 1 janvier 2011 (2011-01-01), XP055194862, Darmstadt, Germany Extrait de l'Internet: URL:http://www.rohacell.com/sites/dc/Downl oadcenter/Evonik/Product/ROHACELL/product- information/ROHACELL%20XT%20Product%20Info rmation.pdf [extrait le 2015-06-10]
- "Treillis, subst. masc.", Trésor de la langue française informatisé, 1 janvier 1994 (1994-01-01), pages 1-2, XP055251317, ISBN: 978-2-07-077016-8 Extrait de l'Internet: URL:http://atilf.atilf.fr/dendien/scripts/ tlfiv5/displayp.exe?281;s=3994128240;i=ft- 5-5.htm;; [extrait le 2016-02-18]
- "Treillis (assemblage)", Wikipédia, l'encyclopédie libre, 20 octobre 2014 (2014-10-20), XP055251291, Extrait de l'Internet: URL:https://fr.wikipedia.org/w/index.php?t itle=Treillis_%28assemblage%29&oldid=10838 9500 [extrait le 2016-02-18]

## Description

### Domaine technique

Le domaine de la présente invention est celui des turbomachines, notamment des turboréacteurs pour aéronefs. Plus particulièrement, l'invention se rapporte aux aubes de turbomachines axiales présentant une structure interne avec un treillis de renfort.

### Technique antérieure

Les compresseurs et les turbines d'une turbomachine axiale comprennent chacun plusieurs rangées annulaires d'aubes. Ces dernières permettant d'accélérer, de ralentir, de redresser, ou bien de dévier un flux d'air annulaire. Ces fonctions permettent de comprimer le flux, ou d'en récupérer une énergie motrice. Pour remplir ces rôles dans le domaine aéronautique, les aubes doivent être légères pour réduire la masse de la turbomachine. L'allègement est également synonyme de réduction d'inertie dans le contexte d'un rotor.

L'optimisation de la masse d'une aube doit néanmoins respecter des critères de résistance mécanique et de résistance thermique. Une aube doit résister à des vibrations ; et éventuellement à des ingestions de corps étrangers. En sus, les aubes rotoriques sont confrontées à la force centrifuge. Tous ces paramètres compliquent la conception des aubes, d'autant plus qu'ils varient en chaque point. Pour offrir des aubes surmesure qui répondent aux exigences précitées, il est connu de concevoir puis produire des aubes avec treillis.

Le document US2013/0276461 A1 divulgue une aube creuse de turbomachine axiale. L'aube présente une alvéole interne délimitée par une peau externe présentant une surface intrados et une surface extrados. L'alvéole est occupée par un treillis tridimensionnel avec des nœuds entre ses tiges. Le treillis relie l'intrados et l'extrados. Par ailleurs, il est venu de matière avec la peau grâce à un procédé de fabrication additive. Ce procédé met en œuvre une poudre en tant que métal d'apport qui est déposé puis solidifié par couches.

Un tel type d'aube offre une grande liberté de conception, ce qui permet d'optimiser de front la résistance mécanique et la masse, grâce à la présence et à l'absence de matière en différents endroits. Or, la fabrication additive impose de prévoir une ouverture dans l'alvéole pour la vider de la poudre non solidifiée. En fonctionnement, l'ouverture expose l'alvéole à l'environnement de l'aube qui peut la dégrader et l'alourdir, si bien qu'un balourd peut apparaître sur un rotor muni de telles aubes.

Le document EP 0 764 764 A1 divulgue une aube de soufflante composite. L'aube de soufflante comporte une pale dont le matériau forme une cavité et un treillis, la cavité étant remplie par une mousse en contact du treillis.

Le document EP 1 447 208 A2 divulgue une aube de soufflante avec des bourrelets internes. Les bourrelets internes se rejoignent de manière à diviser l'intérieur de l'aube en différentes poches.

### Résumé de l'invention

### Problème technique

L'invention a pour objectif de résoudre au moins un des problèmes posés par l'art antérieur. Plus précisément, l'invention a pour objectif de limiter l'impact de l'environnement sur une aube creuse réalisée par fabrication additive à base de couches de poudre. L'invention a également pour objectif de préserver l'équilibrage d'un rotor aubagé d'une turbomachine.

### Solution technique

L'invention est définie dans les revendications adjointes, et a pour objet une aube de turbomachine axiale selon la revendication 1, un procédé de fabrication d'une aube de turbomachine axiale selon la revendication 12, ainsi qu'une turbomachine selon la revendication 15. Les revendications dépendantes définissent certains modes de réalisation préférés mais non limitatifs de cette aube de turbomachine axiale et de ce procédé de fabrication d'une aube de turbomachine axiale.

### Avantages apportés

L'invention permet de protéger la cavité de l'aube en y appliquant de la mousse. La barrière étanche formée par la mousse protège aussi bien contre les attaques chimiques que contre des intrusions d'impuretés. La présence du treillis offre l'avantage de procurer un support homogène à la mousse. Celle-ci peut s'y accrocher en une multitude de points, de surfaces réparties dans la cavité. De la sorte, la mousse est maintenue de manière optimale, en particulier contre les vibrations de la turbomachine, ou contre la force centrifuge dans le cas d'une aube rotorique.

L'aspect fermé de la mousse forme un absorbeur de choc, un amortisseur de coups car les bulles de la mousse peuvent se comprimer élastiquement pour encaisser un impact lors d'une ingestion. Eventuellement, l'aspect viscoélastique de la mousse permet d'amortir des vibrations de l'aube monobloc sans impacter son inertie.

Dans le cas de structures complexes, certaines particules ou grains de poudre peuvent se détacher après l'opération d'enlèvement de poudre non solidifiée. La présence de la mousse permet justement de piéger ces grains de poudre. Dès lors, la réalisation de formes encore plus complexes est autorisée, sans s'ajouter de contrainte liée au nettoyage qui d'ailleurs devient plus rapide.

### Brève description des dessins

La figure 1 représente une turbomachine axiale selon l'invention.
La figure 2 esquisse un compresseur de turbomachine selon l'invention.
La figure 3 illustre une aube de turbomachine selon l'invention.
La figure 4 ébauche une coupe de l'aube selon l'invention suivant l'axe 4-4 tracé sur la figure 3.
La figure 5 représente un procédé de fabrication d'aube selon l'invention.

### Description des modes de réalisation

Dans la description qui va suivre, les termes intérieur ou interne et extérieur ou externe renvoient à un positionnement par rapport à l'axe de rotation d'une turbomachine axiale.

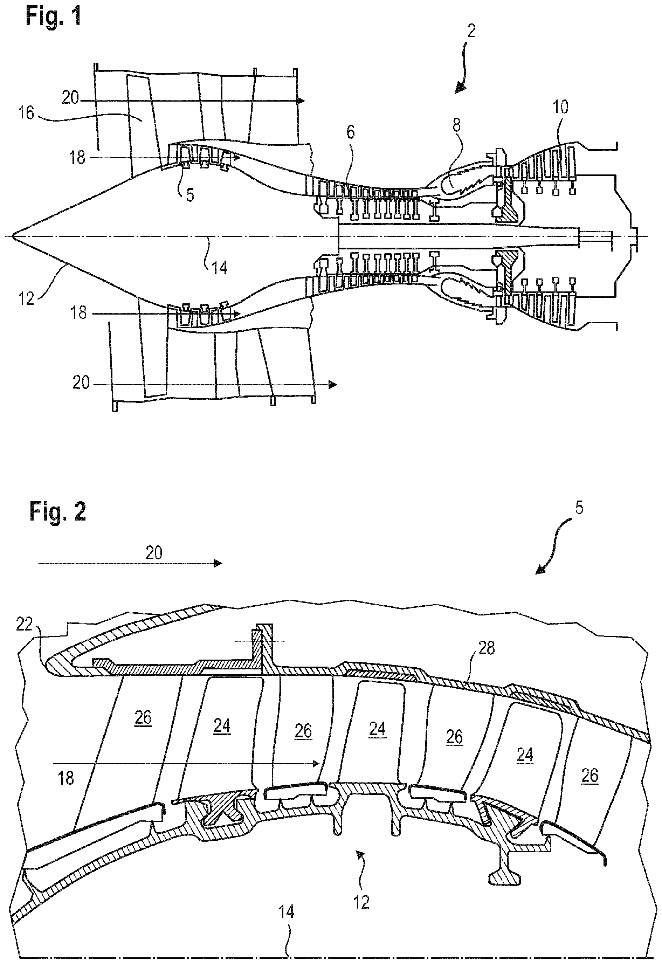

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 5, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 5 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 5. On peut y observer le bec de séparation 22 du flux primaire 18 et du flux secondaire 20. Le rotor 12 comprend plusieurs rangées d'aubes rotoriques 24, en l'occurrence trois.

Le rotor 12 peut présenter un même type d'aubes rotoriques 24, ou différents types d'aubes rotoriques 24. Le rotor 12 peut comprendre un tambour et/ou des disques. Il peut également comporter des aubes rotoriques 24 soudées au tambour tout comme à un disque, et/ou des aubes rotoriques 24 chaussées dans des gorges annulaires de montage d'aubes, et/ou enchassées sur un corps annulaire de rétention. Selon le cas, une aube rotorique 24 comporte une pale soudée sur une plateforme tubulaire du rotor, ou bien sur un moignon du rotor 12. Ou encore, une aube rotorique 24 peut présenter une portion de fixation avec des pattes de fixation inclinées qui épousent la surface intérieure du corps annulaire ou la surface intérieure de la gorge annulaire.

Le compresseur basse pression 5 comprend plusieurs redresseurs, en l'occurrence quatre, qui contiennent chacun une rangée d'aubes statoriques 26. Les redresseurs sont associés au fan ou à une rangée d'aubes rotoriques 24 pour redresser le flux d'air, de sorte à convertir la vitesse du flux en pression statique.

Les aubes statoriques 26 s'étendent essentiellement radialement depuis un carter extérieur 28, et peuvent y être fixées à l'aide d'un axe fileté, ou de rivets. Elles peuvent également présenter une plateforme plaquée contre le carter extérieur 28, l'axe prolongeant radialement la plateforme. Chaque plateforme présente des portions s'étendant depuis la pale de l'aube associée, lesdites portions formant des pattes axiales et/ou latérales.

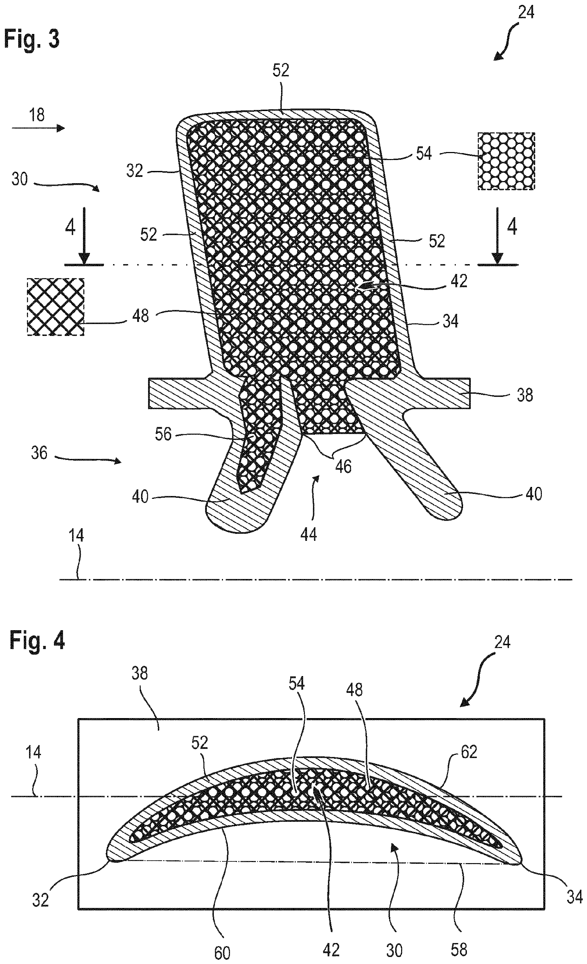

La figure 3 représente une coupe d'une aube selon l'invention. L'axe de rotation 14 est représenté. L'aube ici détaillée est une aube rotorique 24, il pourrait également s'agir d'une aube statorique telle que celles précédemment décrites. Ou encore, le présent enseignement peut être appliqué à une aube de soufflante de turbomachine.

L'aube 24 comporte une pale 30 destinée à s'étendre radialement dans le flux primaire 18 de la turbomachine. La pale 30 présente un bord d'attaque 32 et un bord de fuite 34; ainsi qu'une surface intrados et une surface extrados qui s'étendent du bord d'attaque 32 au bord de fuite 34. Elle montre par ailleurs une tête et une portion de fixation 36 au niveau de son extrémité interne, ladite portion 36 prolonge la pale 30 vers l'intérieur. La portion 36 peut présenter une plateforme 38 dont la surface externe délimite et guide le flux primaire 18. La portion 36 présente des moyens de fixation, telles des pattes de fixation 40.

Le matériau de la pale 30 de l'aube 24 présente un cavité 42 ou évidement. Cette cavité 42 s'étend sur la majorité de la hauteur de la pale 30, ou sensiblement toute sa hauteur radiale. La cavité 42 peut représenter la majorité du volume de la pale 30. La cavité 42 présente un passage ou ouverture 44 en communication avec l'environnement de l'aube 24, l'ouverture est délimitée par des bords 46.

L'aube comprend un treillis 48 dans la cavité 42. Il peut être présent dans la majorité de la cavité 42, préférentiellement dans toute la cavité 42 de la pale 30. Il peut relier le bord d'attaque 32 au bord de fuite 34, sur toute la hauteur de la pale 30. Le treillis 48 peut être plan, et/ou être formé selon une surface gauche, par exemple parallèlement au prolongement radial de la surface intrados ou de la surface extrados. Il peut être essentiellement bi directionnel, par exemple en présentant des mailles plates formées par ses tiges.

Le treillis 48 peut également être un treillis tridimensionnel 48, il peut présenter des mailles polyédriques délimitées par les tiges. Le treillis 48 est lié à chaque surface interne de la cavité 42 de sorte à former une structure tridimensionnelle de renfort interne de l'aube 24. Les mailles peuvent être des tétraèdres et/ou des cubes. Ses tiges peuvent être agencées selon au moins trois directions, par exemple perpendiculaires les unes aux autres. Ses tiges peuvent être distribuées, ou éparpillées dans l'espace de la cavité, éventuellement de manière homogène.

Le treillis 48 peut former plusieurs mailles selon l'épaisseur de la pale, par exemple au moins deux, préférentiellement au moins cinq, plus préférentiellement au moins dix mailles. La compacité du treillis est inférieure à 90%, préférentiellement inférieure à 50%, plus préférentiellement inférieure à 5%.

L'aube 24 présente une enveloppe 52 ou coquille 52, qui forme sa surface intrados, sa surface extrados, son bord d'attaque 32, son bord de fuite 34. L'enveloppe 52 peut présenter une épaisseur constante sur la majorité de la hauteur de l'aube 24, préférentiellement sur toute la hauteur radiale de la pale 30. L'enveloppe 52 est en contact du flux de la turbomachine, et traverse la majorité de la hauteur radiale du flux primaire 18.

L'aube 24 comprend par ailleurs de la mousse fermée 54 dans la cavité 42, ce qui permet de la boucher hermétiquement. Elle peut essentiellement former un bouchon au niveau de l'ouverture 44 pour sceller de manière étanche la cavité 42; son volume peut présenter moins de 10 % du volume de la cavité 42. Elle peut être présente dans la majorité du volume de la cavité 42, ou dans la totalité. Elle est combinée au treillis 48, elle peut s'y mêler sur la majorité de son volume. Elle enrobe les tiges du treillis et occupe les vides ; les polyèdres formés entre les tiges. Grâce à la présence de la mousse 54, l'espace de la cavité 42 devient inaccessible pour l'environnement. De ce fait, les impuretés et les agents chimiques ne peuvent s'y introduire. Le risque d'apparition de balourd et/ou d'attaque chimique est alors réduit. En l'absence de mousse, l'aube présenterait un passage reliant l'ouverture au fond.

La mousse 54 est avantageusement une mousse fermée 54 par assurer l'étanchéité. Par mousse fermée 54 on entend une mousse avec des pores clos ou cellules closes, isolés les uns de autres. Cette configuration favorise l'étanchéité que peut apporter la mousse. Il peut s'agir d'une mousse polymère, telle une mousse polyméthacrylique, éventuellement une mousse polyméthacrylimide. Sa masse volumique est essentiellement réduite, elle peut être inférieure à 52 kg/m3. De la sorte, sa présence ne modifie pas significativement la masse de l'aube 24 puisque son matériau de base, éventuellement du titane et/ou de l'aluminium, présente une densité au moins dix fois, ou au moins cinquante fois, ou au moins quatre-vingt fois supérieure à celle de la mousse fermée.

La portion de fixation 36 peut présenter au moins une alvéole 56, par exemple formée dans une ou chaque patte de fixation 40. L'alvéole 56 peut également être occupée par la mousse 54 et le treillis 48, ce qui permet d'alléger la patte 40 sans que l'alvéole 56 ne soit exposée à l'environnement de l'aube 24.

La figure 4 représente une coupe de l'aube 24 suivant un plan axial 4-4 tracé sur la figure 3. Cette coupe forme un profil aérodynamique de la pale 30 de l'aube 24. L'axe de rotation 14 et la plateforme 38 sont représentés.

La cavité 42 peut représenter la majorité de la longueur de la pale 30, ou sensiblement toute sa longueur ; la longueur étant appréciée le long de la corde 58 de la pale 30. La cavité 42 peut représenter la majorité de l'épaisseur moyenne de la pale 30, ou sensiblement toute sa largeur; la largeur étant appréciée perpendiculairement de la corde 58 de la pale 30.

Le treillis 48 et/ou la mousse 54 occupent la majorité de la longueur et/ou de la largeur de la cavité 42, préférentiellement toute sa longueur et/ou toute sa largeur. La mousse 48 peut adhérer à la surface interne de l'enveloppe 52 pour améliorer son maintien. Le treillis 48 relie la portion intrados 60 à la portion extrados 62 de l'enveloppe 52, ce qui améliore la rigidité de l'aube. La surface intrados 60 peut présenter une portion concave dont le cintre est maintenu par le treillis 48.

Pour un ou chaque profil de l'aube 24, le treillis 48 et/ou la mousse 54 balayent la majorité de la corde 58 de l'aube 24, préférentiellement généralement toute la corde 58 de l'aube. L'association de la mousse 54 et du treillis 48 peut former un matériau composite qui tire profit des qualités de chaque matériau.

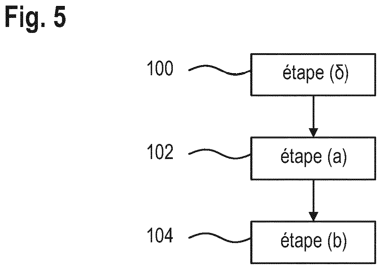

La figure 5 représente un diagramme d'un procédé de fabrication d'une aube de turbomachine, telle que celle illustrée et décrite et en relation avec les figures 3 et 4.

Le procédé peut comprendre l'enchaînement des étapes suivantes, éventuellement réalisées dans cet ordre :
(δ) conception 100 d'une aube de turbomachine axiale ; l'aube comportant une pale, une cavité formée dans la pale et délimitée par l'enveloppe de l'aube, un treillis logé dans la cavité, une portion de fixation.
(a) production 102 par fabrication additive à base de couches de poudre de l'aube conçue lors de l'étape (δ) conception 100,
(b) remplissage 104 de la cavité de l'aube produite lors de l'étape (a) production 102, avec de la mousse fermée en y versant le matériau précurseur de la mousse sur le treillis, via l'ouverture subsistant après la réalisation par fabrication additive. Eventuellement, une portion du matériau d'apport de l'aube est apportée sous la forme d'un fil fondu progressivement.

Grâce au procédé de fabrication, l'enveloppe, la portion de fixation et le treillis sont venus de matière, ce qui améliore la résistance mécanique de l'aube. Le treillis assure ses fonctions de lien et de renfort qui joint les surfaces internes de l'aube jusqu'à la portion de fixation. L'aube peut former un élément monobloc avec une structure mixte, avec plusieurs parties pleines, mais de densités différentes et de nombres de matériaux différents.

Le procédé permet en outre de fabriquer une aube à la fois légère et résistante, sans qu'elle ne soit sujette aux conditions de fonctionnement de la turbomachine. Ainsi, lors de l'étape (δ) conception 100, il est permis de réduire certains coefficients de sécurité servant de marge face aux aléas. L'étape (δ) conception 100 est optionnelle dans l'invention car l'aube peut être produite à partir d'un modèle déjà conçu. Cette étape peut entrer dans le procédé de l'invention lorsque les formes de l'aube sont adaptées aux contraintes de fabrication.

La fabrication additive est un procédé de fabrication bien connu de l'homme du métier. Un matériau d'apport, par exemple sous forme de poudre est déposé en couches superposées. Chaque couche est solidifiée par chauffage pour créer une cohésion de la poudre. La chaleur permettant d'atteindre le point de fusion de la poudre peut être apportée par un laser ou un faisceau d'électrons. Ou encore, il possible de solidifier de la poudre en même temps qu'elle est déposée.

La surface des tiges du treillis peut présenter un aspect granuleux, avec des formes en saillie et des formes en creux. Cet aspect granuleux peut résulter de l'emploi de grains en tant que matériau d'apport, qui conservent partiellement leurs géométries initiales malgré la fusion. La surface des tiges peut présenter une rugosité Ra supérieure à 5 µm, préférentiellement supérieure à 50 µm. La rugosité Ra correspond à la moyenne intégrale des écarts en valeur absolue des variations de hauteur d'un profil donné. Cet état de surface améliore l'adhésion de la mousse sur les tiges.

## Revendications

1. Aube (24 ; 26) de turbomachine axiale (2), notamment de compresseur (5 ; 6), l'aube (24 ; 26) comprenant :
une pale (30) destinée à s'étendre radialement dans un flux (18 ; 20) de la turbomachine (2) ;
une cavité (42) formée dans le matériau de la pale (30) de l'aube (24 ; 26) ; et
un treillis (48) de renfort disposé dans la cavité (42), le treillis (48) étant tridimensionnel et formant plusieurs mailles selon l'épaisseur de la pale (30) ;
**caractérisée en ce qu'**elle comprend en outre
de la mousse fermée (54) en contact du treillis (48) et obturant la cavité (42) pour l'isoler de l'environnement de l'aube (24 ; 26).

2. Aube (24 ; 26) selon la revendication 1, **caractérisée en ce que** la mousse fermée (54) est une mousse polymère, telle qu'une mousse polyméthacrylique, éventuellement i telle qu'mousse polyméthacrylimide.

3. Aube (24 ; 26) selon l'une des revendications 1 à 2, **caractérisée en ce que** la cavité (42) présente une largeur supérieure à l'épaisseur moyenne de la pale (30), et/ou la cavité (42) représente la majorité du volume de la pale (30), et/ou la cavité (42) représente la majorité de la hauteur radiale de la pale (30), et/ou la cavité (42) représente a majorité de la longueur moyenne de la pale (30).

4. Aube (24 ; 26) selon l'une des revendications 1 à 3, **caractérisée en ce que** la mousse (54) est présente dans la majorité ou la totalité de la cavité (42), préférentiellement la mousse (54) couvre la majorité ou la totalité de la surface interne de la cavité (42), plus préférentiellement la mousse (54) s'étend sur la majorité ou la totalité du volume délimité par la cavité (42).

5. Aube (24 ; 26) selon l'une des revendications 1 à 4, **caractérisée en ce que** la cavité (42) présente une ouverture (44) vers l'environnement de l'aube (24 ; 26), la mousse (54) occultant l'ouverture (44), préférentiellement **en ce que** l'ouverture (44) présente des bords (46) au niveau de l'environnement, la mousse (54) affleurant les bords (46) de l'ouverture (44).

6. Aube (24 ; 26) selon l'une des revendications 1 à 5, **caractérisée en ce que** le treillis (48) est majoritairement mêlé à la mousse (54).

7. Aube (24 ; 26) selon l'une des revendications 1 à 6, **caractérisée en ce qu'**elle comprend un bord d'attaque (32) et un bord de fuite (34), une surface intrados (60) et une surface extrados (62) s'étendant du bord d'attaque (32) au bord de fuite (34), une enveloppe externe (52) formant la surface intrados (60) et la surface extrados (62) et délimitant la cavité (42).

8. Aube (24 ; 26) selon l'une des revendications 1 à 7, **caractérisée en ce qu'**à une extrémité radiale de la pale (30), l'aube comporte une portion de fixation (36) formant un corps dans lequel se prolonge la cavité (42), éventuellement **en ce que** l'aube (24 ; 26) comprend de la mousse fermée (54) dans le prolongement de la cavité (42) au niveau radialement de la portion de fixation (36).

9. Aube (24 ; 26) selon l'une des revendications 1 à 8, **caractérisée en ce qu'**elle comporte une extrémité radiale avec des moyens de fixation (40), la cavité débouchant dans ladite extrémité radiale, éventuellement **en ce que** les moyens de fixation comprennent deux pattes de fixation (40) axialement opposées, la cavité (42) débouchant axialement entre les pattes de fixation (40).

10. Aube (24 ; 26) selon l'une des revendications 1 à 9, **caractérisée en ce que** la mousse (54) présente des pores, notamment des pores fermés, qui représentent plus de 50%, préférentiellement plus de 80%, plus préférentiellement plus de 95% de son volume.

11. Aube (24 ; 26) selon l'une des revendications 1 à 10, **caractérisée en ce que** la masse volumique de la mousse (54) est inférieure à 200 kg/m3, et **en ce que** la mousse (54) est moins dense que le matériau de la pale (30) de l'aube (24 ; 26), préférentiellement au moins dix fois moins dense, plus préférentiellement au moins cinquante fois moins dense.

12. Procédé de fabrication d'une aube (24 ; 26) de turbomachine axiale (2), notamment de compresseur basse pression (5) ; le procédé comprenant les étapes suivantes :
(a) production (102) d'une aube (24; 26) avec une pale (30) destinée à s'étendre radialement dans un flux (18 ; 20) de la turbomachine, avec une cavité (42) formée dans le matériau de la pale (30) de l'aube (24 ;26), et avec un treillis (48) de renfort disposé dans la cavité (42), le treillis (48) étant tridimensionnel et formant plusieurs mailles selon l'épaisseur de la pale (30) ;
**caractérisé en ce qu'**il comprend ensuite une étape de :
(b) remplissage (104) de la cavité (42) de la pale (30) avec une mousse fermée (54) de sorte être en contact du treillis (48) et à occuper, au moins partiellement, l'espace libre de la cavité (42), l'aube (24 ; 26) étant éventuellement conforme à l'une des revendications 1 à 11.

13. Procédé selon la revendication 12, **caractérisé en ce que** lors de l'étape (a) de production (102), l'aube (24 ; 26) est réalisée par fabrication additive, préférentiellement par dépôt de couches de poudre de titane et/ou d'aluminium, et lors de l'étape (a) de production (102), le treillis (48) est formé simultanément avec la pale (30) de l'aube (24 ; 26) à l'intérieur de la cavité (42).

14. Procédé selon l'une des revendications 12 à 13, **caractérisé en ce qu'**à l'issue de l'étape (b) de remplissage (104), la cavité (42) est majoritairement occupée, préférentiellement totalement occupée par la mousse (54).

15. Turbomachine (2) comprenant une aube (24 ; 26), **caractérisée en ce que** l'aube (24 ; 26) est conforme à l'une des revendications 1 à 11 ; et/ou **en ce que** l'aube (24 ; 26) est produite selon un procédé de fabrication selon l'une des revendications 12 à 14; préférentiellement **en ce que** la turbomachine (2) est un turboréacteur double flux.

## Patentansprüche

1. Schaufel (24; 26) einer axialen Turbomaschine (2), insbesondere eines Verdichters (5; 6), wobei die Schaufel (24; 26) Folgendes aufweist:
eine Lamelle (30), die dazu bestimmt ist, sich radial in einer Strömung (18; 20) der Turbomaschine (2) zu erstrecken;
einen Hohlraum (42), der im Material der Lamelle (30) der Schaufel (24; 26) ausgebildet ist; und ein Verstärkungsgeflecht (48), das in dem Hohlraum (42) angeordnet ist, wobei das Geflecht (48) dreidimensional ist und eine Vielzahl von Maschen entlang der Dicke der Lamelle (30) bildet; **dadurch gekennzeichnet, dass** sie ferner einen dichtenden Schaumstoff (54) umfasst, der das Geflecht (48) berührt und den Hohlraum (42) abdichtet, um ihn von der Umgebung der Schaufel (24; 26) zu isolieren.

2. Schaufel (24; 26) nach Anspruch 1, **dadurch gekennzeichnet, dass** der dichtende Schaumstoff (54) ein Polymerschaum, wie Polymethacryl-Schaumstoff, möglicherweise wie Polymethacrylimid-Schaumstoff, ist.

3. Schaufel (24; 26) nach einem der Ansprüche 1 bis 2, **dadurch gekennzeichnet, dass** der Hohlraum (42) eine Breite aufweist, die größer ist als die durchschnittliche Dicke der Lamelle (30), und/oder der Hohlraum (42) den Großteil des Volumens der Lamelle (30) darstellt, und/oder der Hohlraum (42) den Großteil der radialen Höhe der Lamelle (30) darstellt, und/oder der Hohlraum (42) den Großteil der durchschnittlichen Länge der Lamelle (30) darstellt.

4. Schaufel (24; 26) nach einem der Ansprüche 1 bis 3, **dadurch gekennzeichnet, dass** der Schaumstoff (54) in der Mehrheit oder der Gesamtheit des Hohlraums (42) vorhanden ist, vorzugsweise der Schaumstoff (54) die Mehrheit oder die Gesamtheit der inneren Oberfläche des Hohlraums (42) bedeckt, noch bevorzugter der Schaumstoff (54) sich über die Mehrheit oder die Gesamtheit des durch den Hohlraum (42) begrenzten Volumens erstreckt.

5. Schaufel (24; 26) nach einem der Ansprüche 1 bis 4, **dadurch gekennzeichnet, dass** der Hohlraum (42) eine Öffnung (44) zur Umgebung der Schaufel (24; 26) aufweist, wobei der Schaumstoff (54) die Öffnung (44) bedeckt, vorzugsweise dadurch, dass die Öffnung (44) auf solche Weise an der Umgebung Kanten (46) aufweist, dass der Schaumstoff (54) mit den Kanten (46) der Öffnung (44) bündig ist.

6. Schaufel (24; 26) nach einem der Ansprüche 1 bis 5, **dadurch gekennzeichnet, dass** das Geflecht (48) überwiegend mit Schaumstoff (54) versetzt ist.

7. Schaufel (24; 26) nach einem der Ansprüche 1 bis 6, **dadurch gekennzeichnet, dass** sie eine Vorderkante (32) und eine Hinterkante (34), eine Innenfläche (60) und eine Außenfläche (62), die sich von der Vorderkante (32) bis zur Hinterkante (34) erstrecken, und eine äußere Hülle (52) umfasst, die die Innenfläche (60) und die Außenfläche (62) bildet und den Hohlraum (42) begrenzt.

8. Schaufel (24; 26) nach einem der Ansprüche 1 bis 7, **dadurch gekennzeichnet, dass** die Schaufel an einem radialen Ende der Lamelle (30) ein Befestigungsteil (36) aufweist, wodurch ein Körper gebildet wird, in den sich der Hohlraum (42) erstreckt, möglicherweise dadurch, dass die Lamelle (24; 26) in der Verlängerung des Hohlraums (42) auf der radialen Ebene des Befestigungsteils (36) dichtenden Schaumstoff (54) aufweist.

9. Schaufel (24; 26) nach einem der Ansprüche 1 bis 8, **dadurch gekennzeichnet, dass** es ein radiales Ende mit Befestigungsmitteln (40) aufweist, wobei der Hohlraum in das radiale Ende mündet, möglicherweise dadurch, dass die Befestigungsmittel zwei axial gegenüberliegende Befestigungslaschen (40) umfassen, wobei der Hohlraum (42) axial zwischen die Befestigungslaschen (40) mündet.

10. Schaufel (24; 26) nach einem der Ansprüche 1 bis 9, **dadurch gekennzeichnet, dass** der Schaumstoff (54) Poren, insbesondere geschlossene Poren, aufweist, die mehr als 50 %, vorzugsweise mehr als 80 %, noch bevorzugter mehr als 95 % seines Volumens ausmachen.

11. Schaufel (24; 26) nach einem der Ansprüche 1 bis 10, **dadurch gekennzeichnet, dass** die Dichte des Schaumstoffs (54) weniger als 200 kg/m³ beträgt, und dass der Schaumstoff (54) weniger dicht als das Material der Lamelle (30) der Schaufel (24; 26) ist, vorzugsweise mindestens zehnmal weniger dicht, noch bevorzugter mindestens fünfzigmal weniger dicht.

12. Verfahren zur Herstellung einer Schaufel (24; 26) einer axialen Turbomaschine (2), insbesondere eines Niederdruckverdichters (5); wobei das Verfahren die folgenden Schritte umfasst:
(a) Herstellen (102) einer Schaufel (24; 26) mit einer Lamelle (30), die dazu bestimmt, sich radial in eine Strömung (18; 20) der Turbomaschine zu erstrecken, mit einem im Material der Lamelle (30) der Schaufel (24; 26) gebildeten Hohlraum (42) und mit einem im Hohlraum (42) angeordneten Verstärkungsgeflecht (48), wobei das Geflecht (48) dreidimensional ist und entsprechend der Dicke der Schaufel (30) eine Vielzahl von Maschen bildet;
**dadurch gekennzeichnet, dass** es dann den folgenden Schritt umfasst:
(b) Füllen (104) des Hohlraums (42) der Lamelle (30) mit dichtendem Schaumstoff
(54), der das Geflecht (48) berührt und zumindest
teilweise den freien Raum des Hohlraums (42) einnimmt, wobei die Schaufel (24; 26) möglicherweise einem der Ansprüche 1 bis 11 entspricht.

13. Verfahren nach Anspruch 12, **dadurch gekennzeichnet, dass** in Schritt (a) des Herstellens (102), die Schaufel (24; 26) durch additive Fertigung hergestellt wird,
vorzugsweise durch Abscheiden von Schichten aus Titanpulver und/oder von Aluminium und im Schritt (a) des Herstellens (102) das Geflecht (48) gleichzeitig mit der Lamelle (30) der Schaufel (24; 26) im Inneren des Hohlraum (42) ausgebildet wird.

14. Verfahren nach einem der Ansprüche 12 bis 13, **dadurch gekennzeichnet, dass** nach dem Schritt (b) des Füllens (104) der Hohlraum (42) überwiegend, vorzugsweise vollständig von dem Schaumstoff (54) eingenommen wird.

15. Turbomaschine (2) mit einer Schaufel (24; 26), **dadurch gekennzeichnet, dass** die Schaufel (24; 26) einem der Ansprüche 1 bis 11 entspricht; und/oder dass die Schaufel
(24; 26) nach einem Herstellungsverfahren nach einem der Ansprüche 12 bis 14 hergestellt wird; vorzugsweise dadurch, dass die Turbomaschine (2) ein Mantelstromtriebwerk ist.

## Claims

1. Vane (24; 26) of an axial turbomachine (2), in particular of a compressor (5; 6), the vane (24; 26) comprising:
an airfoil (30) intended to extend radially in a flow (18; 20) of the turbomachine (2);
a cavity (42) formed in the material of the airfoil (30) of the vane (24; 26); and a reinforcing mesh (48) disposed in the cavity (42), the mesh (48) being three-dimensional and forming a plurality of stitches along the thickness of the airfoil (30); **characterised in that** it further comprises closed foam (54) contacting the mesh (48) and sealing the cavity (42) to isolate it from the environment of the vane (24; 26).

2. Vane (24; 26) according to claim 1, **characterised in that** the closed foam (54) is a polymeric foam, such as polymethacrylic foam, optionally such as polymethacrylimide foam.

3. Vane (24; 26) according to any one of claims 1 to 2, **characterised in that** the cavity (42) has a width greater than the average thickness of the airfoil (30), and/or the cavity (42) represents the majority of the volume of the airfoil (30), and/or the cavity (42) represents the majority of the radial height of the airfoil (30), and/or the cavity (42) represents the majority of the average length of the airfoil (30).

4. Vane (24; 26) according to any one of claims 1 to 3, **characterised in that** the foam (54) is present in the majority or the totality of the cavity (42), preferably the foam (54) covers the majority or the totality of the internal surface of the cavity (42), more preferably the foam (54) extends over the majority or the totality of the volume delimited by the cavity (42).

5. Vane (24; 26) according to any one of claims 1 to 4, **characterised in that** the cavity (42) has an opening (44) to the surroundings of the vane (24; 26), the foam (54) covering the opening (44), preferably **in that** the opening (44) has edges (46) at the surroundings, the foam (54) being flush with the edges (46) of the opening (44).

6. Vane (24; 26) according to any one of claims 1 to 5, **characterised in that** the mesh (48) is mainly mixed with the foam (54).

7. Vane (24; 26) according to any one of claims 1 to 6, **characterised in that** it comprises a leading edge (32) and a trailing edge (34), an intrados surface (60) and an extrados surface (62) extending from the leading edge (32) to the trailing edge (34), an outer envelope (52) forming the intrados surface (60) and the extrados surface (62) and delimiting the cavity (42).

8. Vane (24; 26) according to any one of claims 1 to 7, **characterised in that** at a radial end of the airfoil (30), the vane has a fixing portion
(36) forming a body in which the cavity (42) is extended, optionally **in that** the vane (24; 26) comprises the closed foam (54) in the extension of the cavity (42) at the radial level of the fixing portion (36).

9. Vane (24; 26) according to any one of claims 1 to 8, **characterised in that** it comprises a radial end with fixing means (40), the cavity opening into said radial end, optionally **in that**
the fixing means comprise two axially opposed fixing lugs (40), the cavity (42) opening axially between the fixing lugs (40).

10. Vane (24; 26) according to any one of claims 1 to 9, **characterised in that** the foam (54) has pores, in particular closed pores, which account for more than 50%, preferably more than 80%, more preferably more than 95% of its volume.

11. Vane (24; 26) according to any one of claims 1 to 10, **characterised in that** the density of the foam (54) is less than 200 kg/m3, and **in that** the foam (54) is less dense than the material of the airfoil (30) of the vane (24; 26), preferably at least ten times less dense, more preferably at least fifty times less dense.

12. Method of manufacturing a vane (24; 26) of an axial turbomachine (2), in particular of a low-pressure compressor (5); the method comprising the following steps:
(a) producing (102) a vane (24; 26) with a airfoil (30) intended to extend radially in a flow (18; 20) of the turbomachine, with a cavity (42) formed in the material of the airfoil (30) of the vane (24; 26), and with a reinforcing mesh (48) arranged in the cavity (42), the mesh (48) being three-dimensional and forming a plurality of stitches according to the thickness of the airfoil (30);
**characterised in that** it then comprises a step of:
(b) filling (104) the cavity (42) of the airfoil (30) with a closed foam (54) so as to be in contact with the mesh (48) and to occupy, at least partially, the free space of the cavity (42), the vane (24; 26) optionally conforming to any one of claims 1 to 11.

13. Method according to claim 12, **characterised in that** in step (a)
of production (102), the vane (24; 26) is made by additive manufacturing, preferably by depositing layers of powder of titanium and/or
of aluminium, and in step (a) of production (102), the mesh (48) is formed simultaneously with the airfoil (30) of the vane (24; 26) inside the cavity (42).

14. Method according to any one of claims 12 to 13, **characterised in that** after step (b) of filling (104), the cavity (42) is mainly occupied, preferably completely occupied by the foam (54).

15. Turbomachine (2) comprising a vane (24; 26), **characterised in that** the vane (24; 26) complies with any one of claims 1 to 11; and/or **in that** the vane (24; 26) is produced according to a manufacturing method according to any one of claims 12 to 14; preferably **in that** the turbomachine (2) is a dual-flow turbojet engine.
